# FASCICULE DE BREVET EUROPEEN

(11) **EP 1 130 990 B1**
(45) Date de publication et mention de la délivrance du brevet: **23.07.2003**
(21) Numéro de dépôt: 99972513.8
(22) Date de dépôt: 26.11.1999
(51) Int. Cl.: A47J 43/044

(54) **MECANISME DE FIXATION D'UN COUVERCLE SOLIDAIRE DU MOTEUR D'UN ROBOT MENAGER SUR UN RECIPIENT DE TRAVAIL**
BEFESTIGUNGSMECHANISMUS ZUM FIXIEREN EINES DECKELS MIT EINGEBAUTEM MOTOR EINER KüCHENMASCHINE AUF EINER SCHüSSEL
MECHANISM FOR FIXING A LID INTEGRAL WITH THE MOTOR OF A FOOD PROCESSOR ON A WORKING VESSEL

(30) Priorité: 26.11.1998 FR 9815086
(43) Date de publication de la demande: 12.09.2001
(73) Titulaire: SEB S.A., 69130 Ecully (FR)
(72) Inventeur: TOMPA, Carole, Line, F-65000 Tarbes (FR); ASTEGNO, Jean, Paul, F-64420 Espoey (FR); MARTIN, Guy, F-65290 Louey (FR); DULOUT, Jean, Michel, F-65120 Sazos (FR)
(86) Numéro de dépôt international: FR9902922
(87) Numéro de publication internationale: WO00030515

(56) Documents cités:
- EP-A- 0 257 732
- DE-A- 4 026 166
- US-A- 5 445 070
- US-A- 5 613 424
- PATENT ABSTRACTS OF JAPAN vol. 097, no. 004, 30 avril 1997 (1997-04-30) & JP 08 322741 A (TEC CORP), 10 décembre 1996 (1996-12-10)

## Description

La présente invention est relative à un mécanisme de commande des mâchoires de fixation d'un couvercle solidaire du moteur d'entraînement de l'outil rotatif d'un robot ménager sur un récipient de travail, ces mâchoires de fixation étant conformées pour venir en prise avec des éléments de liaison complémentaires dudit récipient de travail et étant montées sur le couvercle par l'intermédiaire de moyens de guidage, pour pouvoir se déplacer radialement entre deux positions, correspondant à leur engagement, respectivement à leur désengagement, desdits éléments de liaison.

Suivant la taille du robot et si celui-ci est prévu pour que son moteur marche en continu, par exemple pour pétrir de la pâte et a donc une puissance suffisante pour effectuer un tel travail, il devient nécessaire de prévoir la fixation du bloc-moteur sur le récipient de travail, pour les rendre solidaires l'un de l'autre aussi bien que pour des raisons de sécurité.

On a déjà proposé dans le WO 96/01070 ou le US 5 613 424, un mécanisme de fixation d'un couvercle sur un récipient utilisant des mâchoires mobiles radialement sur le couvercle et venant en prise avec des éléments de liaison solidaires du récipient. Il s'agit en particulier, dans ce cas, d'un autocuiseur, dans lequel le couvercle ne comporte qu'un mécanisme de fixation, de sorte que toute la surface du couvercle, et en particulier le centre de celui-ci est disponible pour le mécanisme de fixation et l'actionnement de celui-ci.

Le document DE-A-4 026 166 montre aussi un mécanisme de fixation d'un couvercle.

Il est bien évident qu'il devient sensiblement plus difficile de concevoir un tel mécanisme lorsque le couvercle à fixer ne sert pas uniquement à fermer un récipient, mais porte de plus un moteur d'entraînement de l'outil rotatif d'un robot ménager. L'une des difficultés rencontrées vient du fait que les mâchoires de fixation orientées radialement et l'arbre d'entraînement reliant le moteur d'entraînement à l'outil rotatif ont des axes confondus tous deux avec l'axe de révolution du récipient de travail, de sorte qu'il est nécessaire de trouver une solution qui permette de faire coexister le mécanisme de fixation ainsi que les moyens permettant de l'actionner et le moteur d'entraînement.

La présente invention a pour but un mécanisme de commande des mâchoires de fixation d'un couvercle solidaire du moteur d'entraînement de l'outil rotatif d'un robot ménager sur un récipient de travail, capable de résoudre le problème susmentionné. Elle a également pour but d'accroître la sécurité, l'invention étant plus particulièrement, bien que non exclusivement, destinée à un robot de puissance élevée utilisé avec un récipient de travail de grande capacité, donc à un appareil qui peut devenir dangereux. C'est la raison pour laquelle un des objectifs de la présente invention est de ne permettre la mise en marche du moteur que lorsque le couvercle est fixé sur le récipient de travail et de ne permettre l'enlèvement du couvercle que lorsque le moteur est à l'arrêt.

A cet effet, cette invention a pour objet un mécanisme de commande des mâchoires de fixation d'un couvercle solidaire du moteur d'entraînement de l'outil rotatif d'un robot ménager sur un récipient de travail du type susmentionné, caractérisé en ce que chacune de ces mâchoires de fixation est en prise avec un organe d'actionnement associé à des moyens d'engagement élastiques tendant à maintenir ladite mâchoire de fixation en position d'engagement, cet organe d'actionnement étant susceptible d'occuper deux positions correspondant respectivement au désengagement et à l'engagement de cette mâchoire de fixation et à l'armement, respectivement au désarmement, desdits moyens d'engagement élastiques.

Selon un mode de réalisation préféré, le mécanisme comprend un organe de verrouillage conformé pour venir en prise avec chaque mâchoire de fixation en position désengagée et la maintenir dans cette position à l'encontre desdits moyens de rappel élastiques.

Grâce à ce mécanisme, le désengagement des mâchoires de fixation provoque l'armement des moyens d'engagement élastiques et le verrouillage de ces mâchoires de fixation en position désengagées. Il suffit alors d'actionner l'organe de verrouillage pour désengager l'élément de retenue, permettant aux moyens d'engagement élastiques d'amener les mâchoires de fixation en position d'engagement.

Dans une forme préférée de l'invention, des éléments de désengagement desdits organes de verrouillage sont solidaires dudit récipient de travail et sont conformés pour rencontrer la trajectoire dudit organe de verrouillage lors de la mise en place du couvercle sur ledit récipient de travail et désengager ces organes de verrouillage des mâchoires de fermeture afin de permettre le désarmement desdits moyens d'engagement élastiques et l'engagement des mâchoires de fixation avec les éléments de liaison correspondants.

Contrairement à ce qui se produit dans le cas de la fermeture de l'autocuiseur selon le WO 96/01070 ou le US 5 613 424 susmentionnés, la fixation du couvercle sur le récipient de travail n'est pas obtenue en actionnant manuellement le mécanisme de fixation, mais elle se produit automatiquement lors de la mise en place du couvercle sur le récipient de travail, par le désengagement des éléments de retenue des mâchoires, qui permettent de libérer l'énergie des moyens élastiques de fixation préalablement armés. La commande manuelle est limitée à l'opération de désengagement des mâchoires de fixation, permettant d'utiliser une simple commande par pression qui ne peut fonctionner que dans un sens, libérant ainsi l'axe de révolution du récipient de travail.

Selon un autre mode de réalisation préféré, chacune des mâchoires comporte des moyens d'accostage prévus chacun pour coopérer avec l'un des éléments de liaison du récipient de travail et repousser ladite mâchoire en position désengagée contre les moyens d'engagement élastique lors de la mise en place du couvercle sur le récipient, et des moyens d'accrochage prévus chacun pour venir en prise sur l'un des éléments de liaison du récipient.

Grâce à ce mécanisme, le verrouillage du couvercle sur le récipient est également obtenu automatiquement lors de la mise en place du couvercle sur le récipient. Lors de la mise en place du couvercle, les mâchoires initialement en position d'engagement sont d'abord repoussées par les éléments de liaison du récipient de travail, puis ramenées par les moyens d'engagement élastiques en position d'engagement sur les éléments de liaison du récipient. Lors du déverrouillage, l'utilisateur doit maintenir les mâchoires en position de désengagement en appuyant sur les organes d'actionnement des mâchoires.

Avantageusement et selon une forme préférée de l'invention, le mécanisme de fixation comprend un dispositif de verrouillage présentant un premier élément, cinématiquement solidaire dudit organe d'actionnement et un second élément, complémentaire du premier, cinématiquement solidaire d'un organe de commande d'un interrupteur électrique de commande marche/arrêt dudit moteur d'entraînement, les trajectoires respectives desdits premier et second éléments du dispositif de verrouillage se croisant, de sorte qu'ils viennent en prise dans deux positions respectives déterminées de leurs trajectoires, empêchant ainsi d'une part, d'amener l'organe de commande de cet interrupteur dans la position de mise en marche du moteur, lorsque ladite mâchoire de fixation est en position désengagée et d'autre part, de désengager lesdites mâchoires de fixation lorsque l'organe de commande de l'interrupteur est en position de marche.

Il s'agit là d'une mesure qui permet en particulier d'augmenter en toute sécurité la taille et la puissance de l'appareil, l'outil de travail ne pouvant plus fonctionner que lorsque le moteur est fixé sur le récipient de travail et est donc hors de portée de l'utilisateur lorsqu'il tourne.

De préférence, l'organe d'actionnement de chacune desdites mâchoires est constitué par une bascule comprenant deux bras de part et d'autre d'un axe de pivotement et dont un desdits bras est articulé à ladite mâchoire de fixation, tandis que la trajectoire décrite par l'autre de ces bras, consécutivement au déplacement radial de ladite mâchoire de fixation, est transversale à celle de l'organe de commande dudit interrupteur et coupe la trajectoire de celui-ci lorsque ladite mâchoire de fixation est en position de désengagement.

Selon cette forme d'exécution, l'actionnement des bascules commandant le désengagement des mâchoires de fixation n'est possible que lorsque lesdits premier et second éléments susmentionnés se trouvent simultanément au point de croisement des deux trajectoires.

Avantageusement, l'axe de pivotement de la bascule dudit organe d'actionnement est horizontal, la trajectoire de l'organe de commande dudit interrupteur étant une trajectoire circulaire autour d'un axe vertical.

Le pivotement des bascules d'actionnement des mâchoires de fixation autour d'axes horizontaux permet d'avoir des bascules s'étendant en hauteur, de sorte que l'organe d'actionnement de l'interrupteur peut se trouver à un niveau suffisamment élevé pour laisser une place pour loger le moteur d'entraînement.

Selon une forme préférée de l'invention, le déplacement desdites mâchoires de fixation de leur position d'engagement avec lesdits éléments de liaison dudit récipient de travail à leur position de désengagement, correspond à un mouvement centrifuge, de sorte que ce désengagement résulte d'une pression centripète exercée sur lesdits autres bras desdites bascules d'actionnement desdites mâchoires.

En effet, les autres bras des bascules qui ne sont pas articulés aux mâchoires de fixation se déplacent en sens inverse des mâchoires de fixation. Le mouvement centripète de ces bras permet de les actionner simultanément à l'aide d'une seule main en les rapprochant l'un de l'autre.

Avantageusement, l'axe de rotation du moteur est horizontal, son arbre d'entraînement étant relié par une transmission à pignon angulaire à l'axe de rotation de l'outil de travail du robot ménager.

Cette disposition du moteur permet un gain de place en hauteur et libère le centre du couvercle pour y loger un organe d'actionnement rotatif pour l'interrupteur marche/arrêt.

Selon une forme préférée de l'invention, les moyens de guidage des mâchoires de fixation sont constitués par deux coulisses disposées latéralement de part et d'autre de chaque mâchoire de fixation, une tige solidaire de chaque mâchoire faisant saillie latéralement de part et d'autre de cette mâchoire et s'engageant dans lesdites coulisses respectives.

Ceci permet d'obtenir un bon guidage des mâchoires. La tige peut également servir d'élément de liaison entre chaque mâchoire de fixation et l'organe d'actionnement de cette mâchoire de fixation.

De préférence, un conduit désaxé traverse ledit couvercle pour permettre d'introduire des aliments dans le récipient de travail lorsque le couvercle est fixé sur celui-ci.

Le récipient de travail est généralement transparent, ce qui permet de voir l'état des aliments en cours de malaxage, de pétrissage ou de broyage et d'ajouter des ingrédients en fonction de ce que l'on voit. Par exemple, si une pâte semble trop ou pas assez épaisse, on peut ajouter de l'eau ou de la farine sans enlever le couvercle.

Avantageusement, le mécanisme de fixation est solidaire d'un support intermédiaire en forme de cloison solidaire dudit couvercle et est logé entre ce support et ce couvercle.

Ceci permet de loger tous les organes de ce mécanisme sur ce support qui est lui-même fixé ensuite au couvercle. Ce mécanisme se trouve par la même occasion également protégé.

Selon une forme préférée de l'invention, l'organe de verrouillage est constitué par une bascule comprenant deux bras de part et d'autre d'un axe de pivotement horizontal, le bras solidaire dudit élément de retenue étant pressé élastiquement contre ladite mâchoire de fixation, tandis que l'autre bras présente un palpeur accessible à travers une ouverture ménagée dans ledit support intermédiaire et à travers laquelle ladite portion dudit récipient de travail est susceptible de s'engager au moins partiellement pour faire pivoter ladite bascule par l'intermédiaire dudit palpeur, à l'encontre desdits moyens de rappel élastiques.

Grâce à cette disposition, le palpeur est protégé, de sorte que le risque de provoquer l'actionnement intempestif du mécanisme de fixation est fortement réduit puisque pour y parvenir, il faudrait introduire un outil pointu à travers l'ouverture du support intermédiaire pour dégager l'organe de verrouillage de la mâchoire de fixation. Dans ce cas il ne s'agirait donc plus d'un actionnement accidentel, mais volontaire de la part de l'utilisateur.

Avantageusement le mécanisme de commande est associé à un dispositif de sécurité, disposé dans le couvercle, et prévu pour coopérer avec une coupelle mise en place dans le récipient.

Cette disposition permet notamment d'éviter que l'utilisateur n'accède à l'outil de travail lors du retrait du couvercle. Cette disposition permet aussi de faciliter le nettoyage de l'appareil. La coupelle protège la face inférieure du couvercle des projections de matière alimentaire et peut être plongée dans l'eau ou passée au lave-vaisselle.

Avantageusement le dispositif de sécurité coopère avec le récipient et la coupelle.

Cette disposition permet d'éviter que l'utilisateur puisse mettre en rotation l'ensemble de travail monté sur le boîtier en l'absence du récipient.

Le dispositif de sécurité peut comporter une bascule dont un bras coopère avec le récipient et dont un autre bras coopère avec la coupelle, un microrupteur monté sur la bascule autorisant le fonctionnement de l'appareil lorsque le couvercle est en place sur le récipient comportant la coupelle.

Une telle construction est fiable et peu onéreuse.

L'invention sera mieux comprise à l'étude de deux formes d'exécution du mécanisme de fixation objet de l'invention, décrites ci-après, à titre d'exemples nullement limitatif et illustrés schématiquement dans les figures annexées dans lesquelles :
- la figure 1 est une vue en élévation en coupe illustrant un ensemble de robot ménager comprenant une première forme d'exécution, montrant le mécanisme de fixation en position de désengagement ;
- la figure 2 est une vue partielle semblable à la figure 1, montrant le mécanisme de fixation en position d'engagement ;
- la figure 3 est une vue de dessus avec coupe selon la ligne III-III de la figure 2, le couvercle proprement dit étant considéré comme si il était transparent, ceci uniquement pour faciliter la lecture du dessin ;
- la figure 4 est une vue partielle en élévation en coupe illustrant un ensemble de robot ménager comprenant une deuxième forme d'exécution, montrant le mécanisme de fixation en position d'engagement.

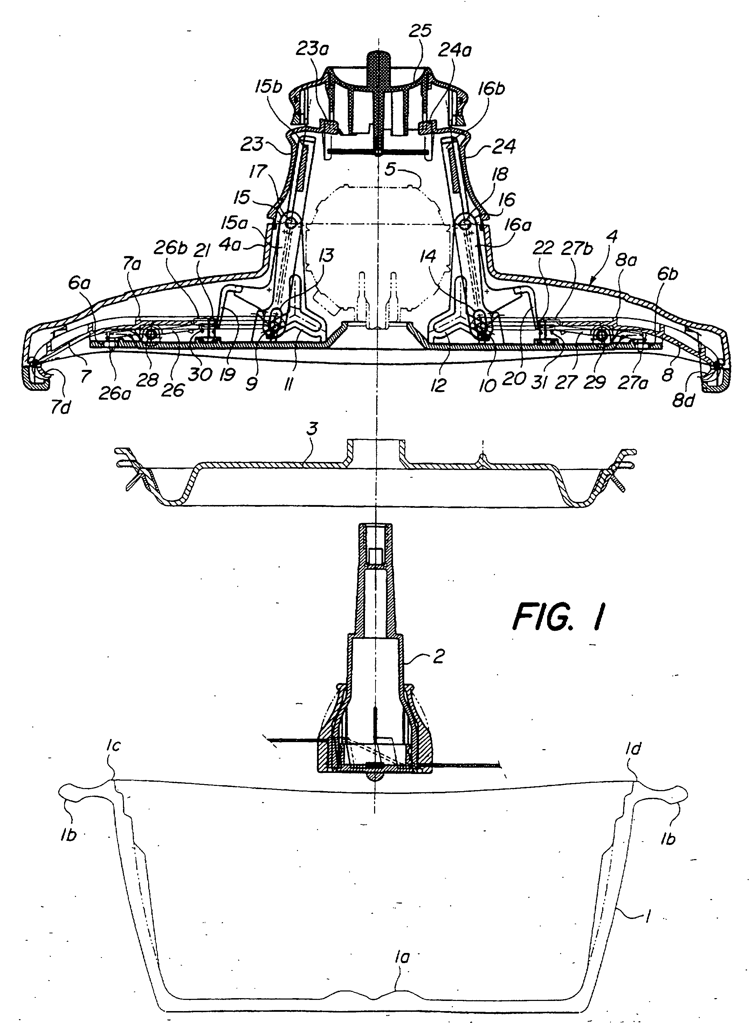

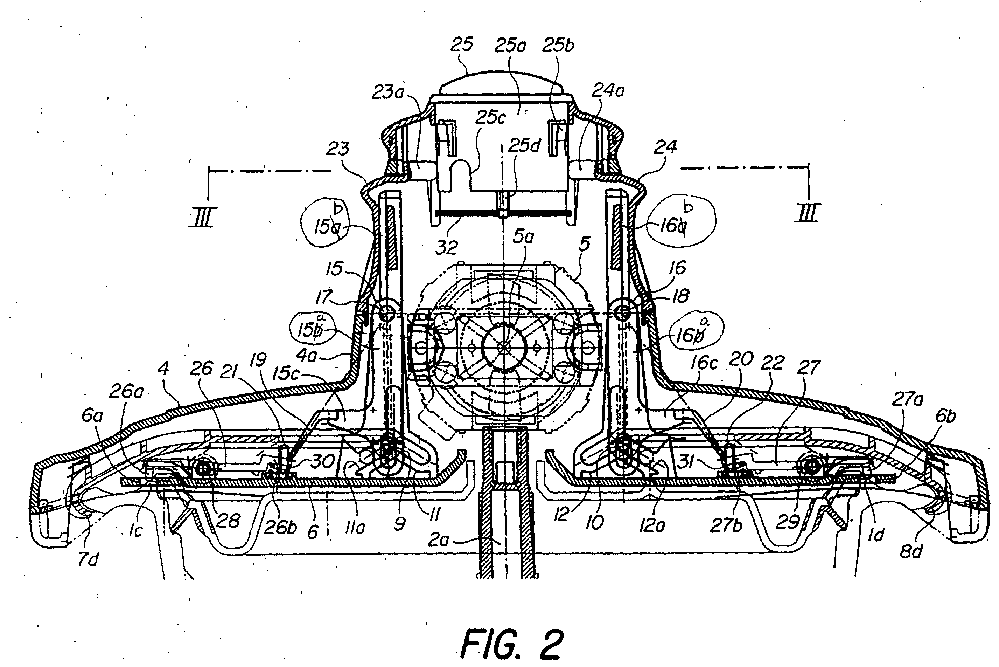

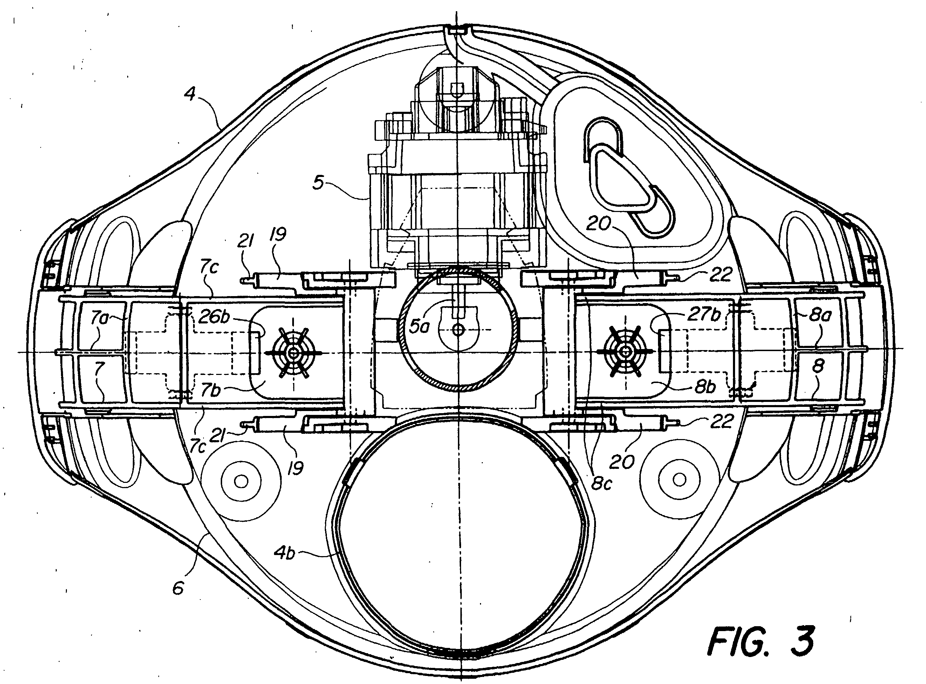

Le robot ménager illustré par la figure 1 comporte un récipient de travail 1 en forme de bol, de préférence en un matériau transparent, notamment en polycarbonate, en verre ou en vitrocéramique, dont le fond présente en son centre, un profilé de centrage en relief 1a destiné à recevoir une extrémité de l'arbre d'entraînement d'un outil rotatif 2. Une coupelle 3 est destinée à être placée sur l'ouverture du récipient de travail 1, qui est ensuite fermé par un couvercle 4, présentant en son centre une partie proéminente 4a dans laquelle un moteur d'entraînement 5 est logé. Comme on peut le constater en particulier sur les figures 2 et 3, ce moteur d'entraînement 5 occupe une position latérale par rapport à l'axe central du couvercle 4 et l'axe de rotation de son arbre d'entraînement 5a est horizontal, de sorte qu'une transmission par pignon angulaire (non représentée) doit être utilisée entre cet arbre 5a et l'arbre d'entraînement 2a de l'outil rotatif 2.

Le couvercle 4 comporte encore un conduit d'alimentation 4b, qui se trouve dans une position latérale par rapport à l'axe central du couvercle 4 et diamétralement opposée au moteur d'entraînement 5. Ce conduit d'alimentation 4b est destiné à l'ajout de substances dans le récipient de travail 1 lorsque le couvercle 4 est fixé sur le récipient de travail. Un support intermédiaire 6, présente la forme d'une cloison solidaire du couvercle 4. Un compartiment est ainsi ménagé entre ce couvercle 4 et ce support intermédiaire 6 qui porte le mécanisme de fixation de ce couvercle 4, objet de la présente invention, que l'on va maintenant décrire en détail.

Ce mécanisme de fixation comporte deux mâchoires de fixation 7, 8 disposées diamétralement opposées par rapport à l'axe de révolution du couvercle 4 et montées radialement coulissantes par rapport à lui. Chacune de ces mâchoires 7, 8 est formée par un élément profilé en forme de U et comporte un réseau de nervures de rigidification 7a, 8a (fig. 3). L'extrémité interne de chaque mâchoire de fixation 7, 8 présente une ouverture sensiblement rectangulaire 7b, respectivement 8b, formant ainsi deux bras parallèles 7c, respectivement 8c, dont les extrémités libres respectives sont traversées par deux tiges 9, respectivement 10, faisant saillie latéralement de part et d'autre de ces mâchoires de fixation 7, 8 pour s'engager dans deux coulisses formées par des rainures de guidage 11 a, 12a ménagées dans deux supports 11, respectivement 12, disposées de chaque côté des mâchoires de fixation 7, 8.

Les extrémités externes 7d, 8d de ces mâchoires de fixation 7, 8 sont recourbées vers le bas pour former des éléments d'accrochage et présentent ainsi des formes complémentaires à deux éléments de liaison 1b faisant saillie le long du bord de l'ouverture du récipient de travail 1, dans deux positions diamétralement opposées. Tel que montré à la figure 1, les éléments de liaison 1 b forment également les poignées du récipient 1.

Entre les bras 7c, 8c (fig. 3) et les supports 11, respectivement 12, les tiges de pivotement 9, 10 passent à travers deux ouvertures allongées 13, respectivement 14, visibles en particulier sur la figure 1 de deux branches d'une bascule 15, respectivement 16, qui se situent donc entre les bras 7c, respectivement 8c, des mâchoires 7 et 8 et les supports 11, respectivement 12, disposés de chaque côté de ces mâchoires 7, respectivement 8.

Chaque bascule 15, 16, qui s'étend dans une position sensiblement verticale, est articulée à peu près au milieu de sa longueur aux supports 11, respectivement 12, par deux tourillons 17, respectivement 18, qui font saillie latéralement de chaque côté des bascules respectives 15, 16 et qui s'engagent dans des ouvertures correspondantes de ces supports 11, 12. Tel que bien visible aux figures 1 et 2, les bascules 15, 16 articulées sur les tourillons 17, 18 sont montées dans le boîtier 4 de part et d'autre du moteur 5. Ces tourillons 17, 18 délimitent sur chaque bascule 15, respectivement 16, deux bras 15a, 15b, respectivement 16a, 16b. Les bras 15a, 16a constituent la partie inférieure des bascules 15, respectivement 16, alors que les bras 15b, 16b en constituent la partie supérieure.

Chaque bras inférieur 15a, 16a de ces bascules 15, respectivement 16, est solidaire d'un appendice 15c, respectivement 16c, qui s'étend vers l'extérieur et qui porte un élément élastique 19, respectivement 20, formé par une lame coudée s'amincissant en direction de son extrémité libre qui prend appui contre une butée 21, respectivement 22, solidaire du support intermédiaire 6.

Les bras supérieurs 15b, 16b de ces mêmes bascules 15, 16 sont en contact avec deux poussoirs 23, respectivement 24, occupant des positions diamétralement opposées et s'étendant sensiblement verticalement dans la paroi de la partie proéminente 4a du couvercle 4. L'extrémité supérieure de chaque poussoir 23, 24 est solidaire d'un élément de verrouillage 23a, respectivement 24a, qui s'étend à l'intérieur de la partie proéminente 4a du couvercle 4.

L'extrémité supérieure de la partie proéminente 4a du couvercle 4 est traversée par une ouverture circulaire à axe vertical dans laquelle un organe de commande 25 d'un interrupteur marche/arrêt du moteur 5 est monté. Cet organe de commande comporte une jupe cylindrique 25a, dans laquelle sont découpés, d'une part des éléments élastiques 25b faisant saillie vers l'extérieur et destinés à maintenir l'organe de commande 25 en place et, d'autre part, deux ouvertures diamétralement opposées 25c, disposées au même niveau que les éléments de verrouillage 23a, 24a et dimensionnées pour laisser passer ces éléments de verrouillage 23a, 24a lorsqu'ils sont pressés radialement selon des directions centripètes. Un axe central 25d est en prise avec un circuit électronique de commande 32 du moteur 5, jouant de préférence, en plus du rôle d'interrupteur, celui d'élément susceptible de définir le régime de fonctionnement du moteur, par exemple, continu, intermittent, ainsi que la vitesse de rotation.

Deux bascules de verrouillage 26, 27 sont montées pivotantes autour d'axes respectifs 28, 29 solidaires du support intermédiaire 6. A une de leurs extrémités, ces bascules de verrouillage 26, 27 présentent une saillie 26a, respectivement 27a, qui s'étend vers le bas. Dans la position des bascules de verrouillage 26, 27 illustrée par la figure 1, ces saillies 26a, 27a s'étendent à travers deux ouvertures 6a, respectivement 6b, du support intermédiaire 6, en ne dépassant pratiquement pas le niveau de la face inférieure de ce support intermédiaire 6. A leurs autres extrémités respectives, ces bascules de verrouillage 26, 27 présentent chacune une saillie 26b, respectivement 27b, qui s'étend vers le haut en formant un angle légèrement obtus avec les bascules de verrouillage respectives 26, 27, pour former des éléments de retenue des mâchoires de verrouillage 7 et 8. Deux ressorts 30, 31 comprimés entre le support intermédiaire 6 et les extrémités des bascules 26, respectivement 27, présentant les saillies 26b, respectivement 27b, servant d'éléments de retenue, pressent ces extrémités contre les faces inférieures des mâchoires de fixation 7, respectivement 8.

Le bord de l'ouverture du récipient de travail 1 comporte deux saillies 1c, 1d diamétralement opposées, conformées pour pouvoir pénétrer à travers les ouvertures 6a, respectivement 6b, du support intermédiaire 6, à une profondeur suffisante pour pouvoir faire pivoter les bascules de verrouillage respectives 26, 27 à l'encontre de la pression des ressorts 30, respectivement 31.

Dans la position de désengagement des mâchoires de fixation 7 et 8 illustrée par la figure 1, c'est-à-dire lorsque les mâchoires de fixation 7 et 8 occupent leurs positions radiales respectives centrifuges, les saillies 26b, 27b, pressées par les ressorts 30, 31 pénètrent dans les ouvertures 7b, respectivement 8b, de ces mâchoires de fixation 7, 8 et les empêchent d'effectuer tout déplacement centripète. On constate sur cette figure 1 que dans cette position, correspondant au désengagement des mâchoires de fixation 7, 8, les bras supérieurs 15b, 16b des bascules 15, respectivement 16, occupent une position de basculement centripète, dans laquelle leurs éléments de verrouillage respectifs 23a, 24a ont pénétré à l'intérieur de la jupe cylindrique 25a de l'organe de commande 25 de l'interrupteur, à travers les ouvertures diamétralement opposées 25c, empêchant ainsi toute rotation de cet organe de commande 25. Cette position dans laquelle l'organe de commande 25 ne peut pas être tourné correspond à l'arrêt du moteur 5.

Dans cette même position des bascules 15, 16, on constate également qu'en raison de la présence des butées 21, respectivement 22, contre lesquelles s'appuient les extrémités libres des éléments élastiques 19 et 20, solidaires des bras inférieurs 15a, respectivement 16a, des bascules 15, 16, ces éléments élastiques 19, 20 sont comprimés. La compression de ces éléments élastiques 19, 20 se produit au cours du pivotement des bascules 15, 16 de la position illustrée par la figure 2 à celle illustrée par la figure 1, consécutivement à des pressions centripètes conjointes exercées sur les poussoirs 23, 24 pour amener les mâchoires de fixation 7, 8 en positions de désengagement, pour permettre l'enlèvement du couvercle 4 du récipient de travail 1.

Lorsque l'on assemble les différents éléments du robot ménager, on dispose l'outil rotatif 2 dans le récipient de travail 1 en positionnant l'extrémité inférieure de son arbre d'entraînement dans le profilé de centrage 1a, on place la coupelle 3 sur le bord du récipient de travail 1, comme illustré par la figure 2 et on met le couvercle 4 en place. En exerçant une pression axiale sur le couvercle 4, on fait pénétrer les saillies 1c, 1d dans les ouvertures 6a, respectivement 6b, poussant ainsi les saillies 26a, respectivement 27a, des bascules de verrouillage 26, 27, provoquant leur basculement à l'encontre de la pression des ressorts 30, respectivement 31, et le désengagement des saillies de retenue 26b, respectivement 27b, des ouvertures 7b, 8b des mâchoires de verrouillage 7, 8. L'énergie emmagasinée dans les éléments élastiques 19, 20 peut alors se libérer. En se détendant, ces éléments élastiques 19, 20 communiquent un mouvement centripète aux mâchoires de fixation 7, 8 dont les extrémités recourbées 7d, 8d viennent alors en prise avec les éléments de liaison diamétralement opposés 1b du récipient de travail 1. De préférence, les éléments élastiques 19, 20 conservent une certaine flexion élastique dans cette position, afin de maintenir une certaine force appliquant les mâchoires de fixation 7, 8 sur les éléments de liaison 1b. Le fait de ne pas laisser les éléments élastiques 19, 20 se détendre complètement permet aussi de compenser les variations de dimensions du récipient de travail 1.

Étant donné que les bras inférieurs 15a, 16a des bascules 15, respectivement 16, sont en prise avec les tiges 9, respectivement 10, solidaires des extrémités arrières des mâchoires de fixation 7, 8, le déplacement de ces dernières provoque les basculements simultanés des bascules 15, respectivement 16, de leurs positions illustrées par la figure 1 à celles illustrées par la figure 2. Ce basculement a pour conséquence de dégager les éléments de verrouillage 23a, respectivement 24a, des ouvertures diamétralement opposées 25c de la jupe cylindrique 25a de l'organe de commande 25 de l'interrupteur marche/arrêt du moteur 5, permettant alors de faire tourner cet organe de commande 25 dans la position angulaire désirée. Cet organe de commande 25 est en effet susceptible d'occuper plusieurs positions angulaires correspondant à différents régimes de fonctionnement du moteur 5, commandés par le circuit électronique 32.

Dès que l'organe de commande 25 est tourné, les ouvertures 25c se déplacent par rapport aux éléments de verrouillage 23a, 24a, empêchant alors à ceux-ci et par conséquent aux bras 15b, respectivement 16b, des bascules 15, 16, d'effectuer tout déplacement centripète. Par conséquent, il est impossible d'enlever le couvercle 4 du récipient de travail lorsque l'organe de commande 25 de l'interrupteur électrique du moteur 5 est sur une position de fonctionnement.

Parmi les avantages du dispositif que l'on vient de décrire, on peut mentionner les bascules 15, 16 servant à commander le désengagement des mâchoires 7, respectivement 8. Ces bascules permettent de transformer le déplacement centripète exercé manuellement sur les bras supérieurs 15b, respectivement 16b, en déplacement centrifuge des mâchoires 7, respectivement 8. Ce déplacement centripète des bras 15b, 16b diamétralement opposés peut être obtenu par pression simultanée sur les poussoirs 23, 24 à l'aide d'une seule main.

Un autre avantage de ce dispositif réside dans le fait que cette action manuelle sur les bras 15b, 16b provoquant le pivotement des bascules 15, respectivement 16, arme simultanément les éléments élastiques 19, 20 solidaires des bras inférieurs 15a, 16a des bascules 15, respectivement 16, et permet en fin de course des mâchoires de fixation 7, 8 l'engagement des saillies de retenue 26b, 27b des bascules de verrouillage 26, respectivement 27, dans les ouvertures 7b, respectivement 8b, des mâchoires de fixation, permettant de maintenir ces éléments élastiques 19, 20 armés, tant que les bascules de verrouillage 26, 27 ne sont pas basculées au cours de la mise en place du couvercle 4 sur le récipient de travail 1.

C'est en effet grâce à ce système d'engagement automatique des mâchoires de fixation 7, 8 contre les éléments de liaison 1b du récipient de travail 1, consécutivement à la libération de l'énergie emmagasinée dans les éléments élastiques 19, 20 que la commande du désengagement de ces mâchoires de fixation 7, 8 est rendue possible. En effet, sans l'engagement automatique de ces mâchoires de fixation 7, 8 lors de la mise en place du couvercle 4, il ne serait pas possible, au moins dans la forme d'exécution décrite, de faire pivoter manuellement les bascules 15, 16 pour les faire passer de la position de désengagement des mâchoires de fixation 7, 8 illustrée par la figure 1, à leur position d'engagement illustrée par la figure 2. En effet, il serait alors nécessaire de pouvoir exercer une pression centripète sur les bras inférieurs 15a, 16a des bascules 15, respectivement 16, qui ne sont pas accessibles et qui pourraient difficilement l'être.

Ce mode de commande du désengagement des mâchoires de fixation 7, 8 permet de libérer la zone centrale du couvercle 4 et de placer dans celle-ci l'organe de commande rotatif 25 de l'interrupteur et de la sélection du régime de marche du moteur d'entraînement 5.

L'engagement des mâchoires de fixation 7 et 8 sur les saillies de liaison 1b ménagées sur le récipient de travail 1, à l'aide de moyens élastiques, présente l'avantage de permettre au mécanisme de fixation selon l'invention de s'adapter aux tolérances du récipient de travail 1. En effet, les éléments élastiques 19, 20 permettent d'assurer l'engagement des mâchoires de fixation 7, 8 avec des tolérances relativement grandes.

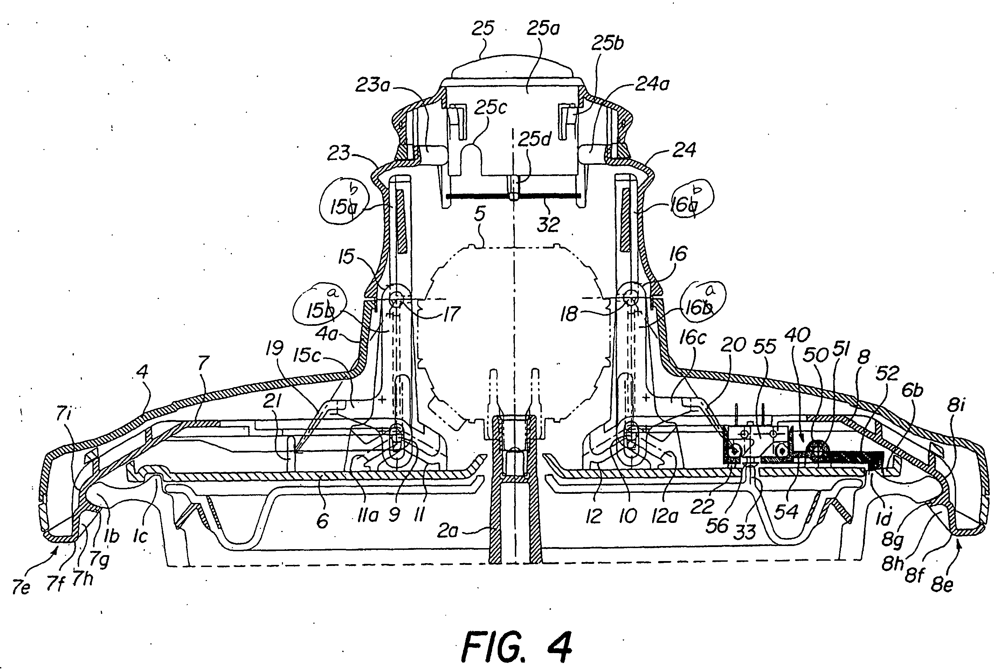

La figure 4 présente un deuxième exemple de réalisation dans lequel le mécanisme de commande des mâchoires de fixation 7, 8 ne comporte pas de moyens de maintien des mâchoires 7, 8 en position désengagée contre les moyens d'engagement élastique 19, 20.

Les mâchoires 7, 8 comportent chacune une extrémité 7e, 8e comportant des moyens d'accostage 7f, 8f prévus pour coopérer avec l'un des éléments de liaison 1b du récipient de travail 1 et repousser les mâchoires 7, 8 en position désengagée contre les moyens d'engagement élastique 19, 20 lors de la mise en place du couvercle 4 sur le récipient 1, et des moyens d'accrochage 7g, 8g prévus pour venir en prise sur les éléments de liaison 1b du récipient 1.

Tel que montré à la figure 4, les moyens d'accostage 7f, 8f sont formés par une nervure 7h, 8h radiale formant une surface d'appui inclinée vers le bas en direction de l'extérieur du couvercle 4. L'inclinaison montrée à la figure 4 est de 60° par rapport à l'horizontale. Les éléments de liaison 1b présentent une forme arrondie propice au glissement des nervures 7h, 8h. Les moyens d'accrochage 7g, 8g sont formés dans les mâchoires 7, 8 par un renfoncement 7i, 8i ménagé au dessus de chacune des nervures 7h, 8h.

Lorsque l'utilisateur pose le couvercle 4 sur le récipient 1 avec les mâchoires 7, 8 en regard des éléments de liaison 1b, et appuie sur ledit couvercle, les nervures 7h, 8h glissent sur les éléments de liaison 1b et repoussent vers l'extérieur du récipient 4 les mâchoires 7, 8 contre les moyens d'engagement élastique 19, 20. Les moyens d'engagement élastique 19, 20 ramènent les renfoncements 7i, 8i sur les éléments de liaison 1b. Les mâchoires 7, 8 sont alors en position d'engagement. Les éléments 23a, 24a solidaires des organes d'actionnement 15, 16 sont dégagés des ouvertures 25c et l'utilisateur peut tourner l'organe d'actionnement 25 pour faire fonctionner l'appareil.

Pour déverrouiller l'appareil, l'utilisateur tourne l'organe d'actionnement 25 dans la position dans laquelle les ouvertures 25c sont en vis-à-vis des éléments 23a, 24a. L'utilisateur peut alors appuyer sur les organes d'actionnement 15, 16 pour amener les mâchoires 7, 8 en position de désengagement, et retirer le couvercle 4 du récipient 1. Lorsque l'utilisateur relâche les organes d'actionnement 15, 16, les mâchoires reprennent leur position d'engagement.

Un dispositif de sécurité 40 monté dans le couvercle 4 comporte une bascule 50 montée sur un axe 51. Un bras 52 de la bascule 50 coopère avec l'une des saillies 1d du récipient 1. Un deuxième bras 54 est disposé à l'opposé du premier bras 52 par rapport à l'axe 51, et porte un microrupteur 55 dont le bouton de commande 56 peut être actionné par un ergot 33 de la coupelle 3.

Lorsque l'utilisateur met en place le couvercle 4 sur le récipient 1 dans lequel est disposé la coupelle 3, la saillie 1d repousse le bras 52, ce qui entraîne la rotation de la bascule 50. Le bouton 56 du microrupteur est amené dans une position dans laquelle l'ergot 33 de la coupelle 3 coopère avec ledit bouton pour fermer le circuit du microrupteur 55. Le moteur 5 peut être alimenté.

En l'absence de la coupelle 3, le bouton 56 n'est pas activé. En l'absence du récipient 1 le bras 52 n'étant pas bloqué en rotation par la saillie 1d, l'ergot 33 repousse le bouton 56 et entraîne la rotation de la bascule 50. Le bouton 56 n'est pas non plus activé.

A titre de variante, le microrupteur 55 peut être disposé sur le bras 52 coopérant avec la saillie 1d du récipient 1, au lieu d'être disposé sur le bras 54 coopérant avec l'ergot 33 de la coupelle 3.

De nombreuses améliorations peuvent être apportées à cet appareil dans le cadre des revendications.

Notamment, les moyens d'accostage du deuxième exemple de réalisation peuvent être supprimés. L'utilisateur doit alors actionner les moyens d'actionnement 15, 16 pour amener les mâchoires 7, 8 en position de désengagement.

Le dispositif de sécurité 40 du deuxième exemple de réalisation peut également être monté dans le premier exemple de réalisation, sur l'une des bascules 26, 27 ou sur une bascule indépendante.

La présente invention trouve une application dans les appareils électroménagers de préparation culinaire comportant un récipient de travail dans lequel tourne un ensemble de travail rotatif entraîné par un moteur placé dans un boîtier disposé au dessus du récipient de travail.

## Revendications

1. Couvercle comportant un mécanisme de commande des mâchoires de fixation (7, 8) (4) sur un récipient de travail (1), ces mâchoires de fixation (7, 8) étant conformées pour venir en prise avec des éléments de liaison (1b) complémentaires dudit récipient de travail (1) et étant montées sur le couvercle (4) par l'intermédiaire de moyens de guidage (9, 10, 11a, 12a) pour pouvoir se déplacer radialement entre deux positions, correspondant à leur engagement, respectivement à leur désengagement, desdits éléments de liaison (1b), **caractérisé en ce que** le couvercle (4) est solidaire du moteur d'entraînement (5) de l'outil rotatif (2) d'un robot ménager et que chacune de ces mâchoires de fixation (7, 8) est en prise avec un organe d'actionnement (15, 16) distinct, chacun de ces organes d'actionnement étant associé à des moyens d'engagement élastiques (19, 20) tendant à maintenir ladite mâchoire de fixation (7, 8) en position d'engagement, ces organes d'actionnement (15, 16) étant susceptibles d'occuper deux positions correspondant respectivement au désengagement et à l'engagement de cette mâchoire de fixation (7, 8) et à l'armement, respectivement au désarmement, desdits moyens d'engagement élastiques (19,20).

2. Couvercle selon la revendication 1, **caractérisé en ce qu'**il comprend un organe de verrouillage (26, 27) conformé pour venir en prise avec chaque mâchoire de fixation (7, 8) en position désengagée et la maintenir dans cette position à l'encontre desdits moyens d'engagement élastiques (19, 20)

3. Couvercle selon la revendication 2, **caractérisé en ce que** des éléments de désengagement (1c, 1d) desdits organes de verrouillage (26, 27), sont solidaires dudit récipient de travail (1) et sont conformés pour rencontrer les trajectoires respectives desdits organes de verrouillage (26, 27) lors de la mise en place du couvercle (4) sur ledit récipient de travail (1) et les désengager des mâchoires de fixation (7, 8) afin de permettre le désarmement desdits moyens d'engagement élastiques (19, 20) et l'engagement des extrémités externes (7d, 8d) desdites mâchoires de fixation (7, 8) avec les éléments de liaison (1b) correspondants.

4. Couvercle selon la revendication 1, **caractérisé en ce que** chacune des mâchoires (7, 8) comporte des moyens d'accostage (7f, 8f) prévus chacun pour coopérer avec l'un des éléments de liaison (1b) du récipient de travail (1) et repousser ladite mâchoire (7, 8) en position désengagée contre les moyens d'engagement élastique (19, 20) lors de la mise en place du couvercle (4) sur le récipient (1), et des moyens d'accrochage (7g, 8g) prévus chacun pour venir en prise sur l'un des éléments de liaison (1b) du récipient (1).

5. Couvercle selon l'une des revendications précédentes, **caractérisé en ce qu'**un dispositif de verrouillage présente un premier élément (23a, 24a), cinématiquement solidaire dudit organe d'actionnement (15, 16) et un second élément (25c), complémentaire du premier, cinématiquement solidaire d'un organe de commande (25) d'un interrupteur électrique de commande marche/arrêt dudit moteur d'entraînement (5), les trajectoires respectives desdits premier (23a, 24a) et second (25c) éléments se croisant, de sorte qu'ils viennent en prise dans deux positions respectives déterminées de leurs trajectoires empêchant ainsi d'une part, d'amener cet organe de commande (25) dans la position de mise en marche du moteur (5) lorsque lesdites mâchoires de fixation (7, 8) sont en position désengagée et d'autre part, de désengager lesdites mâchoires de fixation (7, 8) lorsque l'organe de commande (25) de l'interrupteur est en position de marche.

6. Couvercle selon l'une des revendications précédentes, **caractérisé en ce que** ledit organe d'actionnement (15, 16) de chacune desdites mâchoires de fixation (7, 8) est constitué par une bascule comprenant deux bras (15a, 15b, 16a, 16b) de part et d'autre d'un axe de pivotement (17, 18) et dont un desdits bras (15a, 16a) est articulé auxdites mâchoires de fixation respectives (7, 8), tandis que la trajectoire décrite par l'autre de ces bras (15b, 16b), consécutivement au déplacement radial desdites mâchoires de fixation (7, 8), est transversale à celle dudit organe de commande (25) dudit interrupteur et coupe la trajectoire de celui-ci lorsque lesdites mâchoires de fixation (7, 8) sont en position de désengagement.

7. Couvercle selon la revendication 6, **caractérisé en ce que** lesdits axes de pivotement (17, 18) des bascules (15, 16) desdits organes d'actionnement sont horizontaux, la trajectoire de l'organe de commande (25) dudit interrupteur étant une trajectoire circulaire autour d'un axe vertical.

8. Couvercle selon la revendication 7, **caractérisé en ce que** le déplacement desdites mâchoires de fixation (7, 8) de leur position d'engagement avec lesdits éléments de liaison (1b) dudit récipient de travail (1) à leur position de désengagement, correspond à un mouvement centrifuge, de sorte que ce désengagement résulte d'une pression centripète exercée sur lesdits autres bras (15b, 16b) desdites bascules d'actionnement (15, 16) desdites mâchoires de fixation (7, 8).

9. Couvercle selon l'une des revendications précédentes, **caractérisé en ce que** l'axe de rotation (5a) dudit moteur d'entraînement (5) est horizontal, son arbre d'entraînement étant relié par une transmission à pignon angulaire à l'arbre de rotation (2a) de l'outil de travail (2) du robot ménager.

10. Couvercle selon l'une des revendications précédentes, **caractérisé en ce que** lesdits moyens de guidage (9, 10, 11a, 12a) desdites mâchoires de fixation (7, 8) sont constitués par deux coulisses (11a, 12a) disposées latéralement de part et d'autre de chaque mâchoire de fixation (7, 8), des tiges solidaires (9, 10) des mâchoires de fixation respectives (7, 8), faisant saillie latéralement de part et d'autre de ces mâchoires de fixation (7, 8) et s'engageant dans lesdites coulisses respectives (11a, 12a).

11. Couvercle selon l'une des revendications précédentes, **caractérisé en ce qu'**un conduit (4b) désaxé traverse ledit couvercle (4) pour permettre d'introduire des aliments dans le récipient de travail (1) lorsque le couvercle (4) est fixé sur celui-ci.

12. Couvercle selon l'une des revendications précédentes, **caractérisé en ce qu'**il est solidaire d'un support intermédiaire (6) en forme de cloison solidaire dudit couvercle (4) et qu'il est logé entre ce support intermédiaire (6) et ce couvercle (4).

13. Couvercle selon les revendications 3 et 12, **caractérisé en ce que** chacun desdits organes de verrouillage est constitué par une bascule (26, 27) comprenant deux bras de part et d'autre d'un axe de pivotement horizontal (28, 29), un de ces bras de chaque bascule étant solidaire d'un élément de retenue (26b, 27b) et étant pressé contre ladite mâchoire de fixation (7, 8) par des moyens élastiques (30, 31), tandis que les autres bras respectifs présentent chacun un palpeur (26a, 27a) accessible chacun à travers une ouverture (6a, 6b) ménagée dans ledit support intermédiaire (6) et à travers laquelle ladite portion (1c, 1d) dudit récipient de travail est susceptible de s'engager au moins partiellement pour faire pivoter ladite bascule (26, 27) par l'intermédiaire dudit palpeur (26a, 27a), à l'encontre desdits moyens élastiques (30, 31).

14. Couvercle selon l'une des revendications précédentes, **caractérisé en ce qu'**il est associé à un dispositif de sécurité (40), disposé dans le couvercle (4), et prévu pour coopérer avec une coupelle (3) mise en place dans le récipient (1).

15. Couvercle selon la revendication 14, **caractérisé en ce que** le dispositif de sécurité (40) coopère avec le récipient (1) et la coupelle (3).

16. Couvercle selon la revendication 15, **caractérisé en ce que** le dispositif de sécurité (40) comporte une bascule (50) dont un bras (52) coopère avec le récipient (1) et dont un autre bras (54) coopère avec la coupelle (3), un microrupteur (55) monté sur la bascule (54) autorisant le fonctionnement de l'appareil lorsque le couvercle (4) est en place sur le récipient (1) comportant ta coupelle (3).

17. Couvercle selon l'une des revendications précédentes, **caractérisé en ce que** le moteur (5) est logé dans une partie proéminente (4a) du couvercle (4), les organes d'actionnement (15, 16) étant montés dans le couvercle (4) de part et d'autre du moteur (5).

## Patentansprüche

1. Deckel (4) mit einem Steuermechanismus für Backen (7, 8) zur Befestigung auf einem Arbeitsbehälter (1), wobei diese Befestigungsbacken (7, 8) derart geformt sind, daß sie mit komplementären Verbindungselementen (1b) des Arbeitsbehälters in Eingriff gelangen können, und an dem Deckel (4) über Führungsmittel (9, 10, 11a, 12a) angebracht sind, damit sie sich radial zwischen zwei Positionen verschieben können, die ihrem Einrücken bzw. ihrem Ausrücken von den Verbindungselementen (1b) entsprechen, **dadurch gekennzeichnet, daß** der Deckel (4) mit dem Antriebsmotor (5) des Drehwerkzeugs (2) eines Haushaltsroboters fest verbunden ist, und daß jede dieser Befestigungsbacken (7, 8) mit einem getrennten Betätigungsorgan (15, 16) in Eingriff steht, wobei jedes dieser Betätigungsorgane elastischen Einrückmitteln (19, 20) zugeordnet ist, die dazu neigen, die Befestigungsbacken (7, 8) in Einrückposition zu halten, wobei diese Betätigungsorgane (15, 16) zwei Positionen einnehmen können, die dem Ausrücken bzw. dem Einrücken dieser Befestigungsbacke (7, 8) und dem Spannen bzw. dem Entspannen der elastischen Einrückmittel (19, 20) entsprechen.

2. Deckel nach Anspruch 1, **dadurch gekennzeichnet, daß** er ein Verriegelungsorgan (26, 27) aufweist, das derart geformt ist, daß es in Eingriff mit jeder Befestigungsbacke (7, 8) in der ausgerückten Position gelangen und sie in dieser Position gegen die elastischen Einrückmittel (19, 20) halten kann.

3. Deckel nach Anspruch 2, **dadurch gekennzeichnet, daß** Mittel (1c, 1d) zum Ausrücken der Verriegelungsmittel (26, 27) mit dem Arbeitsbehälter (1) fest verbunden und derart geformt sind, daß sie die jeweiligen Bahnen der Verriegelungsorgane (26, 27) beim Aufsetzen des Deckels (4) auf den Arbeitsbehälter (1) treffen und sie aus den Befestigungsbacken (7, 8) ausrücken, um des Entspannen der elastischen Einrückmittel (19, 20) und das Einrücken der äußeren Enden (7d, 8d) der Befestigungsbacken (7, 8) um die entsprechenden Verbindungselemente (1b) zu ermöglichen.

4. Deckel nach Anspruch 1, **dadurch gekennzeichnet, daß** jede der Backen (7, 8) Kopplungsmittel (7f, 8f) aufweist, die jeweils zum Zusammenwirken mit einem der Verbindungselemente (1b) des Arbeitsbehälters (1) und zum Zurückdrücken der Backe (7, 8) in ausgerückter Position gegen die elastischen Einrückmittel (19, 20) beim Aufsetzen des Deckels (4) auf den Behälter (1) vorgesehen sind, sowie Einhakmittel (7g, 8g), die dazu vorgesehen sind, jeweils an einem der Verbindungselemente (1b) des Behälters (1) in Eingriff zu gelangen.

5. Deckel nach einem der vorhergehenden Ansprüche, **dadurch gekennzeichnet, daß** eine Verriegelungseinrichtung ein erstes Element (23a, 24a), das kinematisch mit dem Betätigungsorgan (15, 16) fest verbunden ist, und ein zu dem ersten komplementäres, zweites Element (25c) aufweist, das kinematisch mit einem Steuerorgan (25) für einen elektrischen Schalter zur Ein-/Aus-Steuerung des Antriebsmotors (5) fest verbunden ist, wobei sich die jeweiligen Bahnen des ersten (23a, 24a) und zweiten Elements (25c) derart kreuzen, daß sie in zwei jeweiligen bestimmten Positionen ihrer Bahnen in Eingriff gelangen, womit einerseits verhindert wird, daß dieses Steuerorgan (25) in die Position zum Einschalten des Motors (5) gebracht wird, wenn die Befestigungsbacken (7, 8) in ausgerückter Position sind, und andererseits verhindert wird, daß die Befestigungsbacken (7, 8) ausgerückt werden, wenn das Steuerorgan (25) für den Schalter in der Ein-Position ist.

6. Deckel nach einem der vorhergehenden Ansprüche, **dadurch gekennzeichnet, daß** das Betätigungsorgan (15, 16) jeder der Befestigungsbacken (7, 8) aus einer Wippe mit zwei Armen (15a, 15b, 16a, 16b) beiderseits einer Schwenkachse (17, 18) besteht, und von der einer der Arme (15a, 16a) an die jeweiligen Befestigungsbacken (7, 8) angelenkt ist, während die Bahn, die von dem anderen dieser Arme (15b, 16b) nach der radialen Verschiebung der Befestigungsbacken (7, 8) beschrieben wird, quer zu derjenigen des Steuerorgans (25) für den Schalter ist und dessen Bahn schneidet, wenn die Befestigungsbacken (7, 8) in Ausrückposition sind.

7. Deckel nach Anspruch 6, **dadurch gekennzeichnet, daß** die Schwenkachsen (17, 18) der Wippen (15, 16) der Betätigungsorgane horizontal sind, wobei die Bahn des Steuerorgans (25) für den Schalter eine kreisförmige Bahn um eine vertikale Achse ist.

8. Deckel nach Anspruch 7, **dadurch gekennzeichnet, daß** die Verschiebung der Befestigungsbacken (7, 8) aus ihrer Einrückposition um die Verbindungselemente (1b) des Arbeitsbehälters (1) in ihre Ausrückposition einer Zentrifugalbewegung entspricht, so daß dieses Ausrücken aus einem zentripetalen Druck resultiert, der auf die anderen Arme (15b, 16b) der Betätigungswippen (15, 16) für die Befestigungsbacken (7, 8) ausgeübt wird.

9. Deckel nach einem der vorhergehenden Ansprüche, **dadurch gekennzeichnet, daß** die Rotationsachse (5a) des Antriebsmotors (5) horizontal ist, wobei seine Antriebswelle durch eine Kegelradübersetzung mit der Drehwelle (2a) des Arbeitswerkzeugs (2) des Haushaltsroboters verbunden ist.

10. Deckel nach einem der vorhergehenden Ansprüche, **dadurch gekennzeichnet, daß** die Führungsmittel (9, 10, 11a, 12a) der Befestigungsbacken (7, 8) aus zwei Gleitbahnen (11a, 12a) bestehen, die seitlich beiderseits jeder Befestigungsbacke (7, 8) angeordnet sind, wobei Stifte (9, 10) der jeweiligen Befestigungsbacken (7, 8) seitlich beiderseits dieser Befestigungsbacken (7, 8) vorstehen und in die jeweiligen Gleitbahnen (11a, 12a) einrücken.

11. Deckel nach einem der vorhergehenden Ansprüche, **dadurch gekennzeichnet, daß** ein versetzter Kanal (4b) den Deckel (4) durchquert, um das Einbringen von Nahrungsmitteln in den Arbeitsbehälter (1) zu ermöglichen, wenn der Deckel (4) auf diesem befestigt ist.

12. Deckel nach einem der vorhergehenden Ansprüche, **dadurch gekennzeichnet, daß** der Mechanismus mit einem Zwischenträger (6) in Form einer festen Trennwand des Deckels fest verbunden ist, und daß er zwischen diesem Zwischenträger (6) und diesem Deckel (4) untergebracht ist.

13. Deckel nach den Ansprüchen 3 und 12, **dadurch gekennzeichnet, daß** jedes der Verriegelungsorgane aus einer Wippe (26, 27) besteht, die zwei Arme beiderseits einer horizontalen Schwenkachse (28, 29) aufweist, wobei einer dieser Arme jeder Wippe mit einem Halteelement (26b, 27b) fest verbunden ist und durch elastische Mittel (30, 31) gegen die Befestigungsbacke (7, 8) gepreßt wird, während die anderen Arme jeweils einen Fühler (26a, 27a) aufweisen, der jeweils durch eine Öffnung (6a, 6b) zugänglich ist, die in dem Zwischenträger (6) vorgesehen ist, und durch die der Abschnitt (1c, 1d) des Arbeitsbehälters wenigstens teilweise einrücken kann, um die Wippe (26, 27) über den Fühler (26a, 27a) gegen die elastischen Mittel (30, 31) zu verschwenken.

14. Deckel nach einem der vorhergehenden Ansprüche, **dadurch gekennzeichnet, daß** er einer Sicherheitseinrichtung (40) zugeordnet ist, die in dem Deckel (4) angeordnet und zum Zusammenwirken mit einer Schale (3) vorgesehen ist, die in den Behälter (1) eingesetzt ist.

15. Deckel nach Anspruch 14, **dadurch gekennzeichnet, daß** die Sicherheitseinrichtung (40) mit dem Behälter (1) und der Schale (3) zusammenwirkt.

16. Deckel nach Anspruch 15, **dadurch gekennzeichnet, daß** die Sicherheitseinrichtung (40) eine Wippe (50) aufweist, von der ein Arm (52) mit dem Behälter (1) zusammenwirkt und ein anderer Arm (54) mit der Schale (3) zusammenwirkt, wobei ein an der Wippe (50) angebrachter Mikroschalter (55) den Betrieb des Geräts zuläßt, wenn der Deckel (4) auf den Behälter (1) mit der Schale (3) gesetzt ist.

17. Deckel nach einem der vorhergehenden Ansprüche, **dadurch gekennzeichnet, daß** der Motor (5) in einem vorstehenden Teil (4a) des Deckels (4) untergebracht ist, wobei die Betätigungsorgane (15, 16) in dem Deckel (4) beiderseits des Motors angebracht sind.

## Claims

1. A lid including a mechanism for controlling fixing jaws (7, 8) for fixing the lid on a working receptacle (1), said fixing jaws (7, 8) being shaped to engage complementary connection elements (1b) of said working receptacle (1) and being mounted on the lid (4) via guide means (9, 10, 11a, 12a) to be capable of moving radially between two positions corresponding respectively to them engaging and disengaging said connection elements (1b), the lid (4b) being **characterized in that** it is secured to a drive motor (5) for driving the rotary tool (2) of a food processor, and **in that** each of the fixing jaws (7, 8) engages with a distinct actuator member (15, 16), each of the actuator members being associated with resilient engagement means (19, 20) tending to hold said fixing jaw (7, 8) in its engagement position, said actuator members (15, 16) being suitable for occupying two positions corresponding respectively to disengagement and to engagement of said fixing jaw (7, 8), and respectively to loading and unloading said resilient engagement means (19, 20).

2. A lid according to claim 1, **characterized in that** it includes a locking member (26, 27) shaped to engage each fixing jaw (7, 8) in the disengaged position and to hold it in said position against said resilient engagement means (19, 20).

3. A lid according to claim 2, **characterized in that** the disengagement elements (1c, 1d) of said locking members (26, 27) are secured to said working receptacle (1) and are shaped to encounter the respective paths of said locking members (26, 27) while the lid (4) is being put into place on said working receptacle (1) and to disengage them from the fixing jaws (7, 8) so as to enable said resilient engagement means (19, 20) to be unloaded and so as to enable the outer ends (7d, 8d) of said fixing jaws (7, 8) to engage the corresponding connection elements (1b).

4. A lid according to claim 1, **characterized in that** each of the jaws (7, 8) has docking means (7f, 8f) each designed to co-operate with one of the connection elements (1b) of the working receptacle (1) and to push said jaw (7, 8) in the disengaged position against the resilient engagement means (19, 20) while the lid (4) is being put into place on the receptacle (1), and catch means (7g, 8g) each designed to engage on one of the connection elements (1b) of the receptacle (1).

5. A lid according to any preceding claim, **characterized in that** a locking device presents a first element (23a, 24a) constrained to move with said actuator member (15, 16) and a second element (25c) complementary to the first element and constrained to move with a control member (25) for controlling an electrical ON/OFF switch of said drive motor (5), the respective paths of said first and second elements (23a, 24a; 25c) comprising so that they come into engagement in two determined respective positions of their paths, thereby firstly preventing said control member (25) being brought into the position for turning the motor (5) ON while said fixing jaws (7, 8) are in the disengaged position, and secondly preventing said fixing jaws (7, 8) from disengaging while the switch control member (25) is in the ON position.

6. A lid according to any preceding claim, **characterized in that** said actuator member (15, 16) of each of said fixing jaws (7, 8) is constituted by a rocker comprising two arms (15a, 15b, 16a, 16b) on either side of a pivot axis (17, 18), one of said arms (15a, 16a) being hinged to said respective fixing jaws (7, 8), while the path followed by the other one of said arms (15b, 16b) following radial displacement of said fixing jaws (7, 8) is transverse to the path of said switch control member (25) and intersects its path when said fixing jaws (7, 8) are in the disengagement position.

7. A lid according to claim 6, **characterized it that** said pivot axes (17, 18) of the rockers (15, 16) of said actuator members are horizontal, the path of the switch control member (25) being a circular path about a vertical axis.

8. A lid according to claim 7, **characterized in that** the movement of said fixing jaws (7, 8) from their engagement position with said connection elements (1b) of said working receptacle (1) to their disengagement position corresponds to an outwardly-directed movement so that said disengagement results from inwardly-directed pressure exerted on said other arms (15b, 16b) of said actuator rockers (15, 16) of said fixing jaws (7, 8).

9. A lid according to any preceding claim, **characterized in that** the axis of rotation (5a) of said drive motor (5) is horizontal, its drive shaft being connected via an angled gear transmission to the rotary shaft (2a) of the working tool (2) of the food processor.

10. A lid according to any preceding claim, **characterized in that** said guide means (9, 10, 11a, 12a) of said fixing jaws (7, 8) are constituted by two slideways (11a, 12a) disposed laterally on either side of each fixing jaw (7, 8), rods (9, 10) secured to the respective fixing jaws (7, 8) projecting laterally on either side of the fixing jaws (7, 8) and engaging in said respective slideways (11a, 12a).

11. A lid according to any preceding claim, **characterized in that** an off-center duct (4b) passes through said lid (4) to enable food to be introduced into the working receptacle (1) while the lid (4) is fixed thereon.

12. A lid according to any preceding claim, **characterized in that** it the mechanism is secured to an intermediate support (6) in the form of a partition secured to said lid (4) and **in that** the mechanism is housed between said intermediate support (6) and said lid (4).

13. A lid according to claims 3 and 12, **characterized in that** each of said locking members is constituted by a rocker (26, 27) comprising two arms on either side of a horizontal pivot axis (28, 29), one of the arms of each rocker being secured to a retaining element (26b, 27b) and being pressed against said fixing jaw (7, 8) by resilient means (30, 31), while the other respective arms present respective feelers (26a, 27a) each accessible through an opening (6a, 6b) formed in said intermediate support (6) and through which said portion (1c, 1d) of said working receptacle is capable of engaging at least in part in order to cause said rocker (26, 27) to pivot under drive from said feeler (26a, 27a) against said resilient means (30, 31).

14. A lid according to any preceding claim, **characterized in that** it is associated with a safety device (40) placed in the lid (4) and designed to co-operate with a cover (3) put into place in the receptacle (1).

15. A lid according to claim 14, **characterized in that** the safety device (40) cooperates with the receptacle (1) and the cover (3).

16. A lid according to claim 15, **characterized in that** the safety device (40) comprises a rocker (50) having one arm (52) co-operating with the receptacle (1) and having another arm (54) co-operating with the cover (3), a microswitch (55) mounted on the rocker (54) allowing the appliance to operate when the lid (4) is in place on the receptacle (1) including the cover (3).

17. A lid according to any preceding claim, **characterized in that** the motor (5) is housed in a projecting portion (4a) of the lid (4), the actuator members (15, 16) being mounted in the lid (4) on either side of the motor (5).
